# EUROPÄISCHE PATENTSCHRIFT

(11) **EP 0 641 940 B1**
(45) Veröffentlichungstag und Bekanntmachung des Hinweises auf die Patenterteilung: **14.01.1998**
(21) Anmeldenummer: 94109183.7
(22) Anmeldetag: 15.06.1994
(51) Int. Cl.: F16B 7/18, F16B 12/40, F16B 12/44

(54) **Verbindungseinrichtung für Profilteile**
Joint assembly for profiled elements
Dispositif de connexion pour pièces profilées

(30) Priorität: 09.08.1993 DE 4326642
(43) Veröffentlichungstag der Anmeldung: 08.03.1995
(73) Patentinhaber: FESTO AG & Co, 73734 Esslingen (DE)
(72) Erfinder: Stoll, Kurt, Dipl.-Ing., D-73732 Esslingen (DE); Bender, Burkard, D-73730 Esslingen (DE)
(74) Vertreter: Abel, Martin, Dipl.-Ing.

(56) Entgegenhaltungen:
- EP-A- 0 539 687
- DE-U- 9 102 254
- DE-U- 9 304 053
- DE-U- 9 304 054

## Beschreibung

Die Erfindung betrifft eine Verbindungseinrichtung für Profilteile, die zum Aufbau von Konstruktionen wie Tische , Regale, Gestelle oder dergleichen verwendbar sind, zur Verbindung eines ersten Profilteils mit einem quer zu diesem verlaufenden, mit einer Stirnseite zu einer Längsseite des ersten Profilteils weisenden zweiten Profilteil, wobei das erste Profilteil an der dem zweiten Profilteil zugewandten Längsseite eine sich in Längsrichtung erstreckende erste Verankerungsnut aufweist, deren schlitzartige seitliche Längsöffnung von der Längsachse einer an dem zweiten Profilteil vorgesehenen und an der dem ersten Profilteil zugewandten Stirnseite offenen zweiten Verankerungsnut getroffen wird, mit einem ersten Verbindungsteil, das sich in der ersten Verankerungsnut in einer Verankerungsstellung anordnen läßt, in der es sich so am ersten Profilteil abstützt, daß es sich einer Entnahme durch die schlitzartige Längsöffnung hindurch widersetzt, mit einem in der zweiten Verankerungsnut anzuordnenden zweiten Verbindungsteil, und mit einem an den beiden Verbindungsteilen angreifenden Spannteil, das sich zu einer Spannbewegung antreiben läßt, bei der die beiden Verbindungsteile im wesentlichen in Richtung der Längsachse der zweiten Verankerungsnut aufeinander zugerichtet beaufschlagt werden, wobei das zweite Verbindungsteil in der zweiten Verankerungsnut längs unbeweglich festgelegt wird.

Unter Verwendung von stangenähnlichen Profilteilen aufgebaute Konstruktionen verfügen häufig über Verbindungsstellen, an denen ein Profilteil stirnseitig stumpf an die Längsseite eines anderen Profilteils angesetzt ist, so daß die beiden Profilteile im rechten Winkel zueinander verlaufen. Die zur Verbindung verwendeten Verbindungseinrichtungen sollten möglichst spanlos arbeiten, so daß keine Bohrungen zu setzen oder Gewinde zu schneiden sind, die eine spätere Wiederverwendung der Profilteile zu anderen Zwecken ausschließen würden. Eine entsprechende Verbindungseinrichtung der eingangs genannten Art geht aus dem deutschen Gebrauchsmuster DE-U 93 04 054 hervor. Dort sind zwei in den Verankerungsnuten der beiden Profilteile zu positionierende Verbindungsteile vorgesehen, wobei das eine Verbindungsteil nach Art eines Nutensteins in der ersten Verankerungsnut verankert ist, während sich das andere Verbindungsteil in der zweiten Verankerungsnut verkantet, wenn ein beide Verbindungsteile beaufschlagendes Spannteil angezogen wird.

Obgleich die bekannte Verbindungseinrichtung eine sichere Verbindung zuläßt, ist eine Optimierung in Bezug auf den Herstellungsaufwand und die Handhabbarkeit erstrebenswert. Es ist bisher eine exakte Abstimmung der Abmessungen des zweiten Verbindungsteils auf den Querschnitt der zweiten Verankerungsnut erforderlich, um den Verkantungseffekt zu gewährleisten. Desweiteren muß beim Einlegen dieses zweiten Verbindungsteils in die zugeordnete zweite Verankerungsnut stets auf korrekte Ausrichtung geachtet werden. Letztlich ist darauf zu achten, daß die das Verkanten ermöglichenden Kanten des Verbindungsteils stets scharf genug sind, um ein sicheres Fixieren in der zugeordneten Verankerungsnut zu ermöglichen.

Es ist die Aufgabe der vorliegenden Erfindung, eine Verbindungseinrichtung der eingangs genannten Art zu schaffen, die bei vereinfachter Herstellung und Handhabbarkeit eine zuverlässige feste Verbindung zweier quer zueinander verlaufender Profilteile ermöglicht.

Zur Lösung dieser Aufgabe ist vorgesehen, daß ein in der zweiten Verankerungsnut zwischen den beiden Verbindungsteilen anzuordnendes Stützteil vorgesehen ist, das bei der Spannbewegung des zweiten Verbindungsteils angreifenden Spannteils von dem zweiten Verbindungsteil in Richtung des ersten Verbindungsteils beaufschlagt wird und sich dabei unter Einnahme einer Abstützstellung über die offene Stirnseite der zweiten Verankerungsnut mit mindestens einer Abstützpartie an dem ersten Profilteil abstützt, und daß das zweite Verbindungsteil und das Stützteil über einen Schwenkbereich derart miteinander in Wirkverbindung stehen, daß sie relativ zueinander eine Schwenkbewegung quer zur Längsachse der zweiten Verankerungsnut ausführen und dadurch in dieser zweiten Verankerungsnut in Querrichtung vergespannt werden, wenn das zweite Verbindungsteil bei in Abstützstellung befindlichem Stützteil unter Vermittlung des Spannteils zunehmend in Richtung des Stützteils beaufschlagt wird.

Es ist also ein Stützteil vorgesehen, das sich zwischen den beiden Verbindungsteilen befindet und in der zweiten Verankerungsnut angeordnet wird. Das an den beiden Verbindungsteilen angreifende Spannteil verlagert das zweite Verbindungsteil in Richtung des Stützteils, wenn es zu der Spannbewegung angetrieben wird, also beispielsweise mittels eines Werkzeuges angezogen wird. Das im Weg des zweiten Verbindungsteils angeordnete Stützteil wird hierbei bis zur Anlage an dem ersten Profilteil (Abstützstellung) verlagert. Wird nun das Spannteil weiter angezogen, so wirken zwischen dem zweiten Verbindungsteil und dem am ersten Profilteil abgestützten Stützteil entgegengesetzt gerichtete Kräfte, die dazu führen, daß die vorgenannten Teile relativ zueinander zu einer Schwenkbewegung um den Schwenkbereich veranlaßt werden. Dies führt dazu, daß die beiden genannten Teile in der zweiten Verankerungsnut gegen unterschiedliche Bereiche der Nutinnenfläche angepreßt werden und dadurch in einer Weise in Querrichtung verspannt werden, daß sie in Längsrichtung unbeweglich festgeklemmt sind. Um die Verbindung wieder zu lösen, bedarf es nur eines geringfügigen Lösens des Spannteils, so daß die Intensität der Querspannung reduziert wird und die beiden Teile wieder relativ zur zweiten Verankerungsnut beweglich sind. Der bei der Schwenkbewegung zurückgelegte Schwenkweg kann äußerst gering sein und sich zum Beispiel im Bereich von 1/10 bis 1/1000 mm bewegen, je nach dem, wie exakt die beiden Teile in die zweite Verankerungsnut eingepaßt sind. Toleranzabweichungen spielen hierbei eine nur untergeordnete Rolle, so daß eine relativ kostengünstige Herstellung möglich ist. Auch die Handhabung ist sehr einfach und es wird eine dauerhafte Festigkeit auch noch nach einer Vielzahl von Spann- und Lösevorgängen erzielt.

Vorteilhafte Weiterbildungen der Erfindung sind in den Unteransprüchen aufgeführt.

Von besonderen Vorteil ist es, das zweite Verbindungsteil und das Stützteil einstückig miteinander auszubilden, so daß ein die beiden Teile in sich vereinigendes Klemmelement vorliegt. Dieses Klemmelement weist dann zweckmäßigerweise einen nicht ganz durchgehenden Querschlitz auf, so daß sich zwischen den beiden Teilen ein die relative Schwenkbewegung ermöglichender Verformungsfreiraum ergibt, der an einer Seite durch eine insbesondere stegartige Verbindungspartie begrenzt ist. Die Verbindungspartie gibt den Schwenkbereich vor, so daß die Breite des Verformungsfreiraumes bei der Schwenkbewegung variiert. Da nur geringe Schwenkwege benötigt werden, kann das Klemmelement insgesamt aus Metall bestehen, insbesondere aus Stahl mit üblicher Elastizität.

Nachfolgend wird die Erfindung anhand der beiliegenden Zeichnung näher erläutert. In dieser zeigen:
- Figur 1: zwei bevorzugte Bauformen der Verbindungseinrichtung in Gebrauchsstellung, mit Blickrichtung längs des zweiten Profilteils gemäß Pfeil I aus Figur 2, wobei das Spannteil der zweiten Verbindungseinrichtung zur Verbesserung der Übersichtlichkeit nicht dargestellt ist, und wobei von dem ersten Profilteil nur der der Verbindungsstelle zugeordnete Abschnitt gezeigt ist,
- Figur 2: die Anordnung aus Figur 1 im Längsschnitt gemäß Schnittlinie II-II aus Figur 1,
- Figur 3: die bei der Anordnung gemäß Figuren 1 und 2 verwendete, jeweils im oberen Figurenbereich gezeigte Verbindungseinrichtung in explosionsartiger Einzeldarstellung, und
- Figur 4: das bei der Verbindungseinrichtung gemäß Figur 3 verwendete Klemmelement in Einzeldarstellung und in Seitenansicht gemäß Pfeil IV aus Figur 3, wobei strichpunktiert einige relevante Flächen der im einzelnen nicht dargestellten und miteinander zu verbindenden Profilteile angedeutet sind.

Aus der Zeichnung gehen zwei stangenförmige Profilteile 1, 2 mit linearer Erstreckung hervor, die zweckmäßigerweise als Strangpreßteile ausgebildet sind und insbesondere aus Aluminiummaterial bestehen. Es handelt sich um Profilteile gleicher Art mit einem beim Ausführungsbeispiel quadratischen Rechteckquerschnitt. In jeder der sich so ergebenden längsseitigen Außenflächen ist mindestens eine Verankerungsnut 3, 4 ausgebildet, die sich über die gesamte Länge des jeweiligen Profilteils 1, 2 erstreckt und zu jeweils beiden Stirnseiten hin offen ist. Über eine schlitzartige Längsöffnung 5, 6 öffnet sich eine jeweilige Verankerungsnut 3, 4 zudem zur jeweils zugeordneten Profilteil-Außenfläche.

Die Verankerungsnuten 3, 4 der beispielsgemäßen Profilteile 1, 2 verfügen untereinander zweckmäßigerweise über den gleichen Querschnitt. Sie haben jeweils einen sich an die zugeordnete Außenfläche anschließenden Nuthals 7, der einerseits die zugeordnete Längsöffnung 5, 6 bildet und andererseits, in Tiefenrichtung der zugeordneten Verankerungsnut 3, 4 in einen breiteren Verankerungsabschnitt 8 übergeht. Somit ergibt sich eine Art T-Nut, wobei die seitlich neben dem Nuthals 7 liegenden und dem Nutgrund zugewandten Flächenabschnitte des Verankerungsabschnittes 8 Abstützflächen 12 bilden, die sich über die gesamte Nutlänge erstrecken.

Die beiden zu verbindenden Profilteile 1, 2 sind beispielsgemäß im rechten Winkel zueinander ausgerichtet, wobei das zweite Profilteil 2 mit einer Stirnseite 13 an eine Längsseite 14 des ersten Profilteils 1 angestoßen ist, die von einer der vier längsverlaufenden, durch eine jeweilige Verankerungsnut 3 nochmals längsunterteilte Außenfläche des ersten Profilteils 1 gebildet ist. Die Ausrichtung ist dabei so getroffen, daß die an der besagten Längsseite 14 vorgesehene erste Verankerungsnut 3 des ersten Profilteils 1 in einer gemeinsamen Ebene mit zwei zweiten Verankerungsnuten 4 des zweiten Profilteils 2 verläuft, die im Bereich zweier einander entgegensetzter Außenflächen des zweiten Profilteils 2 vorgesehen sind. Die Längsachse 16 einer jeweiligen zweiten Verankerungsnut 4 trifft hierbei die schlitzartige Längsöffnung 5 der ersten Verankerungsnut 3 des ersten Profilteils 1. Die Nuthälse 7 beider Verankerungsnuten 3, 4 gehen somit, da beispielsgemäß kein weiteres Zwischenteil vorgesehen ist, im Stoßbereich 19 der beiden Profilteile 1, 2 unmittelbar ineinander über.

Die beiden Profilteile 1, 2 sind in der gezeigten Ausrichtung einander gegenüber fest fixiert. Ursache hierfür ist die erfindungsgemäße Verbindungseinrichtung 17, die beim Ausführungsbeispiel zweifach vorhanden ist. Durch die Zweifachanordnung ist eine optimale Abstützung gegen angreifende Biegemomente erreicht. Gleichwohl ist für die Verbindung zweier Profilteile 1, 2 eine einzige Verbindungseinrichtung 17 ohne weiteres ausreichend.

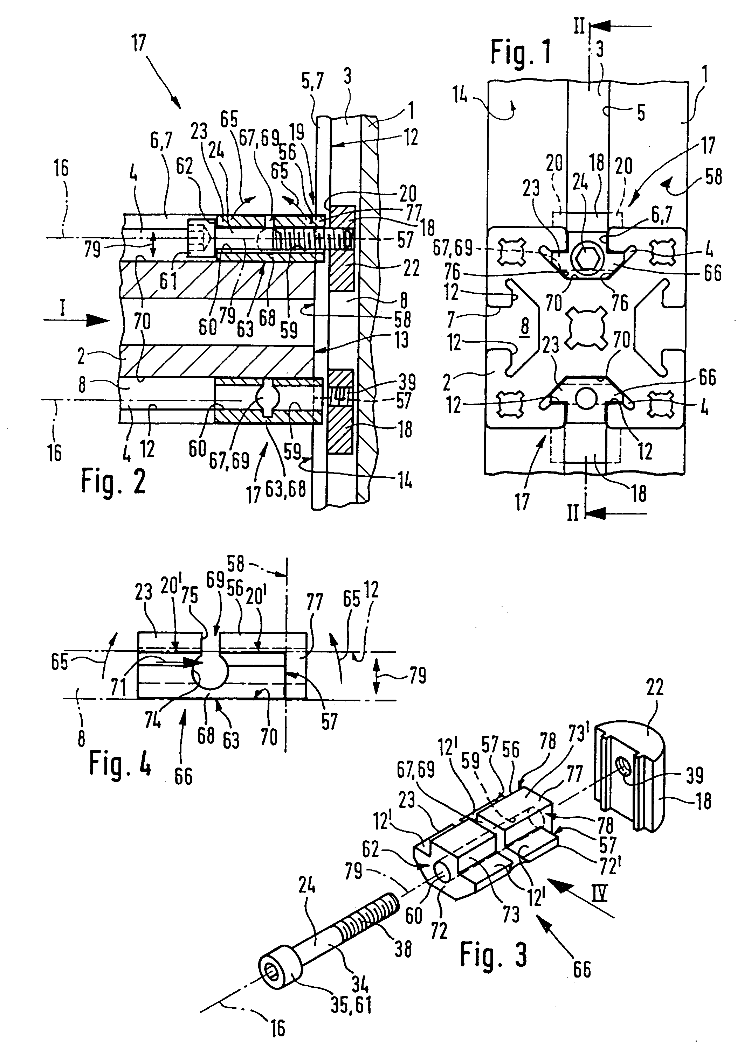

Zu einer jeweiligen Verbindungseinrichtung 17 gehört zunächst ein erstes Verbindungsteil 18, das beispielsgemäß von einem Nutenstein gebildet ist, und das in Gebrauchsstellung in der ersten Verankerungsnut 3 des ersten Profilteils 1 angeordnet ist. Dabei kommt eine Befestigungspartie 22 des ersten Verbindungsteils 18 so in dem Verankerungsabschnitt 8 zu liegen, daß an ihr vorgesehene zweite Abstützflächen 20 den beidseits des Nuthalses 7 vorgesehen Abstützflächen 12 gegenüberliegen und sich daran quer zur Nutlängsrichtung abstützen können. Auf diese Weise ist gewährleistet, daß sich das erste Verbindungsteil bei in Richtung der Längsachse 16 erfolgender Beaufschlagung einer Entnahme durch die zugeordnete schlitzartige Längsöffnung 5 hindurch widersetzt und in Querrichtung fest in der ersten Verankerungsnut 3 verankert bleibt. Die entsprechende Verankerungsstellung ist aus Figuren 1 und 2 gut ersichtlich.

Das Einbringen des ersten Verbindungsteils 18 in die erste Verankerungsnut 3 erfolgt entweder nutstirnseitig, oder aber durch die Längsöffnung 5 hindurch, indem es über den Nuthals 7 in den Verankerungsabschnitt 8 eingeschwenkt wird.

Ein zweites Verbindungsteil 23 befindet sich in Gebrauchsstellung der Verbindungseinrichtung 17 wie abgebildet in der zweiten Verankerungsnut 4 des zweiten Profilteils 2.

Die beiden Verbindungsteile 18, 23 sind in Richtung der Längsachse 16 aufeinanderfolgend jeweils in der ihnen zugeordneten Verankerungsnut 3, 4 aufgenommen. Ein Stützteil 56, das ebenfalls zur Verbindungseinrichtung 17 gehört, befindet sich in dem Bereich zwischen den beiden Verbindungsteilen 18, 23 und ist hierbei in der zweiten Verankerungsnut 4 aufgenommen. Bei gelöster Verbindungseinrichtung 17 sind sowohl das zweite Verbindungsteil 23 als auch das Stützteil 56 längsbeweglich in der zweiten Verankerungsnut 4 angeordnet.

An der dem ersten Verbindungsteil 18 zugewandten Stirnseite verfügt das Stützteil 56 über zwei Abstützpartien 57, die jeweils einem Abschnitt der Außenfläche 58 der zugewandten Längsseite 14 des ersten Profilteils 1 gegenüberliegen. Durch axiale Verlagerung in der Verankerungsnut 4 läßt sich das Stützteil 56 in die aus Figuren 2 und 4 ersichtliche Abstützstellung verbringen, in der es mit den Abstützpartien 57 an den erwähnten Partien der Außenfläche 58 anliegt. Hierbei greift das Stützteil 56 durch die offene Stirnseite der zweiten Verankerungsnut 4 hindurch.

Eine jeweilige Verbindungseinrichtung 17 verfügt desweiteren über ein Spannteil 24, das in Gebrauchsstellung gleichzeitig an beiden Verbindungsteilen 18, 23 angreift. Mit ihm ist es möglich, die beiden Verbindungsteile 18, 23 aufeinander zu gerichtet zu beaufschlagen, wobei die Beaufschlagungsrichtung bzw. -achse 79 zumindest im wesentlichen mit der Längsrichtung 16 einer jeweils zugeordneten zweiten Verankerungsnut 4 zusammenfällt.

Als Spannteil 24 ist beim Ausführungsbeispiel ein von einer Schraube gebildeter Zuganker 34 vorgesehen. Er hat am einen Ende einen Gewindeabschnitt 38, mit dem er sich in ein komplementäres Gewinde 39 des ersten Verbindungsteils 18 einschrauben läßt. Er erstreckt sich im wesentlichen parallel zur Längsachse 16, wobei er das Stützteil 56 und das zweite Verbindungsteil 23 durchdringt, zu welchem Zweck die genannten Teile axial miteinander fluchtende bohrungsartige Durchbrechungen 59, 60 aufweisen. Im Bereich des zweiten Verbindungsteils 23 verfügt der Zuganker 34 über eine Spannpartie 61, die beispielsgemäß außerhalb des zweiten Verbindungsteils 23 angeordnet ist und einer an diesem vorgesehenen, dem Stützteil 56 abgewandten Beaufschlagungsfläche 62 gegenüberliegt, die sich z.B. an der dem Stützteil 56 entgegengesetzten Stirnseite des zweiten Verbindungsteils 23 befindet. Desweiteren ist eine beim Ausführungsbeispiel in Baueinheit mit der Spannpartie 61 ausgebildete Betätigungspartie 35 vorgesehen, die durch die schlitzartige Längsöffnung 6 hindurch das Ansetzen eines geeigneten Schraubwerkzeuges ermöglicht, um den Zuganker 34 in eine Spannbewegung oder eine Lösebewegung zu versetzen.

Bei der Spannbewegung schraubt sich der Gewindeabschnitt 38 des Zugankers 34 in das Gewinde 39 des ersten Verbindungsteils 18 ein. Gleichzeitig drückt die Spannpartie 61 auf die Beaufschlagungsfläche 62 des zweiten Verbindungsteils 23 und verlagert dieses in der zweiten Verankerungsnut 4 in Richtung zum ersten Profilteil 1. Hierbei wird das Stützteil 56 von dem ersten Verbindungsteil 18 beaufschlagt und mit seinen Abstützpartien 57 fest in die oben erwähnte Abstützstellung gedrückt. Auf diese Weise erfolgt eine feste Einspannung des ersten Profilteils 1, dessen beide den Nuthals 7 begrenzende Abschnitte fest zwischen den ersten Abstützflächen 20 des ersten Verbindungsteils 18 und den Abstützpartien 57 des Stützteils 56 eingespannt werden.

Nach Erreichen der Abstützstellung ist das Stützteil 56 an einer weiteren Axialbewegung in Richtung zum ersten Profilteil 1 gehindert. Es bildet daher einen Widerstand für das es beaufschlagende erste Verbindungsteil 18. Nun stehen allerdings das Stützteil 56 und das zweite Verbindungsteil 23 über einen Schwenkbereich 63 miteinander in Verbindung, der es den beiden Teilen ermöglicht, bei einer bestimmten axial gerichteten Beaufschlagungsintensität quer zur Längsachse 16 relativ zueinander eine Schwenkbewegung auszuführen. Wird also das Spannteil 24 nach Erreichen der Abstützstellung durch das Stützteil 56 noch weiter gespannt, so führt diese Beaufschlagung zu dem besagten Verschwenken zwischen dem Stützteil 56 und dem zweiten Verbindungsteil 23, so daß sich diese beiden Teile in der Verankerungsnut 4 verspannen. In den Figuren 2 und 4 sind die entsprechenden Schwenkbewegungen durch Pfeile 65 angedeutet. Ist das Spannteil 24 in ausreichendem Maße angezogen, ergibt sich auf diese Weise eine in Längsrichtung 16 hochfeste Verbindung zwischen der Verbindungseinrichtung 17 und dem zweiten Profilteil 2.

Es versteht sich, daß die Durchmesser der Durchbrechungen 59, 60 ausreichend groß bemessen sind, um dem Stützteil 56 und/oder dem zweiten Verbindungsteil 23 die für die Schwenkbewegung notwendigen Freiheitsgrade zu belassen.

Um die Verbindung wieder zu lösen, ist nur das Spannteil 24 zu lösen, wobei das Stützteil 56 und das zweite Verbindungsteil 23 in die Ausgangsstellung zurückkehren, in der die Klemmung bezüglich der Innenfläche der zweiten Verankerungsnut 4 gelöst ist.

Bevorzugt sind das zweite Verbindungsteil 23 und das Stützteil 56 einstückig miteinander ausgebildet und wie beim Ausführungsbeispiel zu einem einzigen Bauteil zusammengefaßt, das nachfolgend als Klemmelement 66 bezeichnet ist. Dieses Klemmelement 66 ist ein axial fest zusammenhängender Körper, der an einer Stelle seiner Länge einen schlitzartigen Quereinschnitt 67 aufweist, welcher das Klemmelement 66 in das Stützteil 56 und das zweite Verbindungsteil 23 unterteilt. Da der Quereinschnitt das Klemmelement 66 nicht über den gesamten Querschnitt durchtrennt, verbleibt zwischen dem Stützteil 56 und dem zweiten Verbindungsteil 23 eine stegartige Verbindungspartie 68, die den erwähnten Schwenkbereich 63 vorgibt. Im Bereich des Quereinschnittes 67 sind die beiden Teile 56, 23 zueinander beabstandet, so daß sich ein Verformungsfreiraum 69 für die Schwenkbewegung ergibt.

Das Klemmelement 66 des Ausführungsbeispiels besteht aus Metall, insbesondere aus Stahl. Allerdings wäre auch ein anderer hinreichend elastischer Werkstoff verwendbar. Es ist nur jeweils darauf zu achten, daß der Querschnitt der Verbindungspartie 68 so bemessen wird, daß das zum Festklemmen notwendige reversibel elastische Verformungsvermögen vorliegt.

Die notwendige Verformungskraft läßt sich auch über die Auswahl des Querabstandes zwischen der Längsachse des Spannteils 24 und der Verbindungspartie 68 beeinflußen. Die Anordnung sollte jedenfalls so getroffen werden, daß sich der Schwenkbereich 63 seitlich neben dem Spannteil 24 befindet, so wie dies bei den Ausführungsbeispielen der Fall ist.

Bei einer nicht näher dargestellten Ausführungsform sind das Stützteil 56 und das zweite Verbindungsteil 23 als separate Bauteile ausgebildet, die sich in dem Schwenkbereich lediglich berühren. Denkbar wäre es auch, insbesondere eine den Schwenkbereich vorgebende Verbindungspartie 68 aus anderem Material als die angrenzenden Teile auszubilden. Die einstückige Bauform ist jedoch vor allem in fertigungstechnischer Hinsicht von besonderem Vorteil.

Zweckmäßig ist es desweiteren, wenn das Klemmelement 66 bzw. das Stützteil 56 und das zweite Verbindungsteil 23 außen so konturiert sind, daß sie in der Lösestellung insbesondere in Nut-Tiefenrichtung 79 möglichst spielarm in der zugeordneten zweiten Verankerungsnut 4 aufgenommen sind. Auf diese Weise reicht bereits ein äußerst geringfügiges Verschwenken aus, um das Klemmelement 66 in der zweiten Verankerungsnut zu verklemmen. Der Verformungsweg kann dabei im Bruchteil von Millimetern liegen.

Die den Schwenkbereich 63 definierende Verbindungspartie 68 befindet sich bei der in Figuren 1 und 2 im oberen Bildabschnitt gezeigten und auch in Figuren 3 und 4 abgebildeten Verbindungseinrichtung 17 in Gebrauchsstellung gesehen in der der Nähe des Nutgrundes 70 der zweiten Verankerungsnut 4. Wird nun das zweite Verbindungsteil 23 durch das Spannteil 24 gemäß Pfeil 71 in Richtung des sich am zweiten Profilteil 2 abstützenden Stützteils 56 beaufschlagt, dann knickt das Klemmelement 66 im Bereich der Verbindungspartie 68 geringfügig im Sinne einer Verringerung der Breite des Verformungsfreiraumes 69 ab. Hierbei werden am Stützteil 56 und am zweiten Verbindungsteil 23 vorgesehene zweite Abstützflächen 20' an die diesen gegenüberliegend angeordneten ersten Abstützflächen 12 im Innern der zweiten Verankerungsnut 4 angedrückt. Gleichzeitig werden das Stützteil 56 und/oder das zweite Verbindungsteil 23 im Bereich der Verbindungspartie 68 gegen den Nutgrund 70 und/oder die sich an diesen anschließenden Flankenabschnitte 76 der zweiten Verankerungsnut 4 angedrückt.

In der Spannstellung ist das Klemmelement 66 in der zweiten Verankerungsnut in Nut-Tiefenrichtung 79 kraftschlüssig verspannt bzw. verklemmt. Die Klemmung reicht aus, um das Klemmelement 66 in Längsrichtung 16 der zweiten Verankerungsnut 4 unbeweglich festzulegen.

Wie der in Figuren 1 und 2 im unteren Bildabschnitt gezeigten Variante der Verbindungseinrichtung 17 entnehmbar ist, kann der Schwenkbereich 63 bzw. die diesen vorgebende Verbindungspartie 68 durchaus auch so angeordnet sein, daß sie in Gebrauchsstellung im Bereich des Nuthalses 7 zu liegen kommt. Indiesem Falle weist die entgegengesetzte offene Seite des Quereinschnittes 67 in Richtung des Nutgrundes 70. Auch hier beruht jedoch der Klemmeffekt auf einer geringfügigen Schwenkverlagerung zwischen dem Stützteil 56 und dem zweiten Verbindungsteil 23, die dazu führt, daß eine Verklemmung des Klemmelementes 66 zwischen den ersten Abstützflächen 12 und der Nutgrund- und/oder Nutflankenfläche 70, 76 erfolgt.

Das Stützteil 56 und das zweite Verbindungsteil 23 verfügen zweckmäßigerweise jeweils über eine Basispartie 72, 72', deren Querschnittsgestaltung im wesentlichen derjenigen des Verankerungsabschnittes 8 der zugeordneten zweiten Verankerungsnut 4 entspricht. Vorzugsweise ist an der dem Nuthals 7 zugeordneten Oberseite dieser Basispartie 72, 72' jeweils ein Führungsvorsprung 73, 73' angeordnet und insbesondere angeformt, der in den Nuthalsbereich der zweiten Verankerungsnut 4 möglichst spielarm eingreift. Diese Führungsvorsprünge 73, 73' erleichtern die Positionierung des Klemmelements 66 und verhindern ein ungewolltes Verdrehen um die Längsachse 16 beim Betätigen des Spannteils 24. Die Führungsvorsprünge 73, 73' enden innerhalb der zweiten Verankerungsnut 4 und schließen insbesondere bündig mit der zugeordneten Außenfläche des Profilteils 2 ab.

Vor allem aus Figuren 2 bis 4 wird deutlich, daß der Verformungsfreiraum 69 abgesehen von der Verbindungspartie 68 zweckmäßigerweise allseits offen ist. Er ist also in Breitenrichtung der zugeordneten zweiten Verankerungsnut 4 durchgehend und erstreckt sich zudem ausgehend von der Verbindungspartie 68 durchgehend bis zur gegenüberliegenden Längsseite des Klemmelementes 66. Unmittelbar an die Verbindungspartie 68 anschließend verfügt er zweckmäßigerweise über einen Innenabschnitt 74, in dessen Bereich ein größerer Abstand zwischen den aneinander angrenzenden Teilen 56, 23 vorliegt als in einem sich daran anschließenden Außenabschnitt 75. Der Innenabschnitt 74 kann in Seitenansicht gemäß Figur 4 gesehen insbesondere kreisrund konturiert sein. Er verbessert das elastische Verformungsverhalten während des Schwenk- bzw. Biegevorganges zwischen dem Stützteil 56 und dem zweiten Verbindungsteil 23.

Letztlich verfügt das beispielsgemäße Klemmelement 66 an der dem ersten Profilteil 1 zugewandten Stirnseite noch über einen Zentriervorsprung 77, der so ausgebildet ist, daß er in der Abstützstellung in den Nuthals 7 der ersten Verankerungsnut 3 am ersten Profilteil 1 eintaucht. Die Eintauchtiefe ist so gewählt, daß das erste Verbindungsteil 18 nicht beaufschlagt wird, so daß die Klemmung nicht beeinträchtigt wird. Der Zentriervorsprung 77 unterstützt die Ausrichtung der beiden Profilteile 1, 2, indem er an entgegengesetzten Seiten zwei ebene Zentrierflächen 78 aufweist, die mit den Begrenzungsflächen des Nuthalses 7 zusammenarbeiten können.

## Patentansprüche

1. Verbindungseinrichtung mit Profilteilen, die zum Aufbau von Konstruktionen wie Tische, Regale, Gestelle oder dergleichen verwendbar sind, zur Verbindung eines ersten Profilteiles (1) mit einem quer zu diesem verlaufenden, mit einer Stirnseite zu einer Längsseite (14) des ersten Profilteils (1) weisenden zweiten Profilteil (2), wobei das erste Profilteil (1) an der dem zweiten Profilteil (2) zugewandten Längsseite (14) eine sich in Längsrichtung erstreckende erste Verankerungsnut (3) aufweist, deren schlitzartige seitliche Längsöffnung (5) von der Längsachse (16) einer an dem zweiten Profilteil (2) vorgesehenen und an der dem ersten Profilteil (1) zugewandten Stirnseite offenen zweiten Verankerungsnut (4) getroffen wird, mit einem ersten Verbindungsteil (18), das sich in der ersten Verankerungsnut (3) in einer Verankerungsstellung anordnen läßt, in der es sich so am ersten Profilteil (1) abstützt, daß es sich einer Entnahme durch die schlitzartige Längsöffnung (5) hindurch widersetzt, mit einem in der zweiten Verankerungsnut (4) anzuordnenden zweiten Verbindungsteil (23), und mit einem an den beiden Verbindungsteilen (18, 23) angreifenden Spannteil (24), das sich zu einer Spannbewegung antreiben läßt, bei der die beiden Verbindungsteile (18, 23) im wesentlichen in Richtung der Längsachse (16) der zweiten Verankerungsnut (4) aufeinander zu gerichtet beaufschlagt werden, wobei das zweite Verbindungsteil (23) in der zweiten Verankerungsnut (4) längsunbeweglich festgelegt wird, dadurch gekennzeichnet, daß ein in der zweiten Verankerungsnut (4) zwischen den beiden Verbindungsteilen (18, 23) anzuordnendes Stützteil (56) vorgesehen ist, das bei der Spannbewegung des am zweiten Verbindungsteil (23) angreifenden Spannteils von dem zweiten Verbindungsteil (23) in Richtung des ersten Verbindungsteils (18) beaufschlagt wird und sich dabei unter Einnahme einer Abstützstellung über die offene Stirnseite der zweiten Verankerungsnut (4) mit mindestens einer Abstützpartie (57) an dem ersten Profilteil (1) abstützt, und daß das zweite Verbindungsteil (23) und das Stützteil (56) über einen Schwenkbereich (63) derart miteinander in Wirkverbindung stehen, daß sie relativ zueinander eine Schwenkbewegung quer zur Längsachse (16) der zweiten Verankerungsnut (4) ausführen und dadurch in dieser zweiten Verankerungsnut (4) in Querrichtung verspannt werden, wenn das zweite Verbindungsteil (23) bei in Abstützstellung befindlichem Stützteil (56) unter Vermittlung des Spannteils (24) zunehmend in Richtung des Stützteils (56) beaufschlagt wird.

2. Verbindungseinrichtung nach Anspruch 1, dadurch gekennzeichnet, daß zwischen dem zweiten Verbindungsteil (23) und dem Stützteil (56) ein Verformungsfreiraum (69) vorgesehen ist, der von einer den Schwenkbereich (63) vorgebenden und die beiden Teile (56, 23) miteinander verbindenden Verbindungspartie überbrückt ist.

3. Verbindungseinrichtung nach Anspruch 2, dadurch gekennzeichnet, daß der Verformungsfreiraum (69) einen unmittelbar neben der Verbindungspartie (68) angeordneten Innenabschnitt (74) aufweist, in dessen Bereich der Abstand zwischen dem Stützteil (56) und dem zweiten Verbindungsteil (23) größer ist als im Bereich eines sich an der der Verbindungspartie (68) entgegengesetzten Seite an den Innenabschnitt (74) anschließenden Außenabschnittes (75) des Verformungsfreiraumes (69).

4. Verbindungseinrichtung nach Anspruch 2 oder 3, dadurch gekennzeichnet, daß das zweite Verbindungsteil (23) und das Stützteil (56) über die Verbindungspartie (68) einstückig miteinander verbunden sind und durch elastische Materialverformung im Bereich der Verbindungspartie (68) die erforderliche Schwenkbewegung ausführen können.

5. Verbindungseinrichtung nach Anspruch 4, dadurch gekennzeichnet, daß das zweite Verbindungsteil (23) und das Stützteil (56) einstückiger Bestandteil eines insbesondere aus Metall bestehenden Klemmelements (66) sind, das einen unter Belassung der Verbindungspartie (68) den Verformungsfreiraum (69) bildenden Quereinschnitt aufweist.

6. Verbindungseinrichtung nach einem der Ansprüche 1 bis 5, dadurch gekennzeichnet, daß der Schwenkbereich (63) mit Abstand seitlich neben der Beaufschlagungsachse (79) des das zweite Verbindungsteil (23) in Richtung des Stützteils (56) beaufschlagenden Spannteils (24) angeordnet ist.

7. Verbindungseinrichtung nach einem der Ansprüche 1 bis 6, dadurch gekennzeichnet, daß das Spannteil (24) ein Zuganker (34) ist, der sowohl das zweite Verbindungsteil (23) als auch das Stützteil (56) durchdringt, wobei der Schwenkbereich (63) seitliche neben dem Zuganker (34) angeordnet ist.

8. Verbindungseinrichtung nach einem der Ansprüche 1 bis 7, dadurch gekennzeichnet, daß das Stützteil (56) an der dem ersten Profilteil (1) zugewandten Stirnseite einen Zentriervorsprung (77) aufweist, der in der Abstützstellung in die schlitzartige Längsöffnung (5) der ersten Verankerungsnut (1) eintaucht.

9. Verbindungseinrichtung nach einem der Ansprüche 1 bis 8, dadurch gekennzeichnet, daß das erste Verbindungsteil (18) ein Nutenstein ist.

## Claims

1. Connecting device with sections suitable for the construction of structures such as tables, shelving, stands and the like for connecting a first section (1) to a second section (2) extending at right angles thereto with an end face pointing towards a longitudinal side of the first section (1), the longitudinal side (14) of the first section (1) facing the second section (2) being provided with a first anchoring groove (3) extending in the longitudinal direction, the slot-like lateral longitudinal opening (5) of which is met by the longitudinal axis (16) of a second anchoring groove (4) provided on the second section (2) and open on the end face adjacent to the first section (1), with a first connecting element (18) locatable in the first anchoring groove (3) in an anchored position in which it is so supported on the first section (1) that it resists removal through the slot-like longitudinal opening (5), with a second connecting element (23) locatable in the second anchoring groove (4) and with a clamping element (24) acting on the two connecting elements (18, 23) and capable of being driven to perform a clamping movement whereby the two connecting elements (18, 23) are forced towards each other substantially in the direction of the longitudinal axis (16) of the second anchoring groove (4), the second connecting element (23) being longitudinally fixed in the second anchoring groove (4), characterized in that a support element (56) to be located in the second anchoring groove (4) between the two connecting elements (23) is provided, which support element (56) is forced towards the first connecting element (18) by the second connecting element (23) during the clamping movement of the clamping element acting on the second connecting element (23), being supported on the first section (1) with at least one supporting section (57) via the open end face of the second anchoring groove (4) while adopting a supporting position, and in that the second connecting element (23) and the support element (56) are in operative connection with each other by way of a pivoting area (63) to perform a relative pivoting movement at right angles to the longitudinal axis (16) of the second anchoring groove (4), thus being transversely braced in said second anchoring groove (4) when the second connecting element (23) is increasingly forced towards the support element (56) through the action of the clamping element (24) in the support position of the support element (56).

2. Connecting device according to Claim 1, characterized in that a deformation space (69) is provided between the second connecting element (23) and the support element (56), said space being bridged by a connecting section determining the pivoting area (63) and connecting the two elements (56, 23).

3. Connecting device according to Claim 2, characterized in that the deformation space (69) has an inner part (74) located immediately adjacent to the connecting section (68), where the distance between the support element (56) and the second connecting element (23) is greater than in the area of an outer part (75) of the deformation space (69) following the inner part (74) on the side opposite the connecting section (68).

4. Connecting device according to Claim 2 or 3, characterized in that the second connecting element (23) and the support element (56) are integrally linked by way of the connecting section (68) and able to perform the required pivoting movement by means of resilience.

5. Connecting device according to Claim 4, characterized in that the second connecting element (23) and the support element (56) form an integral part of a clamping element (66), in particular a metal clamping element, with a transverse recess forming the deformation space (69) while leaving the connecting section (68).

6. Connecting device according to any of Claims 1 to 5, characterized in that the pivoting area (63) is located at a distance next to the force axis (79) of the clamping element (24) forcing the second connecting element (23) towards the support element (56).

7. Connecting device according to any of Claims 1 to 6, characterized in that the clamping element (24) is a tie-bar (34) extending both through the second connecting element (23) and the support element (56), the pivoting area (63) lying laterally next to the tie-bar (34).

8. Connecting device according to any of Claims 1 to 7, characterized in that the support part (56) has a centring projection (77) on the end face adjacent to the first section (1) dipping into the slot-like longitudinal opening (5) of the first anchoring groove (1) in the support position.

9. Connecting device according to any of Claims 1 to 8, characterized in that the first connecting element (18) is a sliding block.

## Revendications

1. Dispositif de liaison comportant des parties profilées, qui sont susceptibles d'être utilisées pour la réalisation de constructions telles que des tables, des étagères, des échafaudages ou similaires, destiné à relier une première partie profilée (1) avec une deuxième partie profilée (2), s'étendant perpendiculairement à celle-ci, dont une face frontale est orientée en direction d'un côté longitudinal (14) de la première partie profilée (1), la première partie profilée (1) présentant, sur le côté longitudinal (14) orienté en direction de la deuxième partie profilée (2), une première rainure d'ancrage (3) s'étendant dans le sens longitudinal, dont l'ouverture longitudinale (5) latérale, du type fente, est touchée par l'axe longitudinal (16) d'une deuxième rainure d'ancrage (4) prévue sur la deuxième partie profilée (2) et ouverte sur la face frontale orientée en direction de la première partie profilée (1), comportant une première partie de liaison (18) destinée à être placée dans une position d'ancrage, dans la première rainure d'ancrage (3), dans laquelle elle s'appuie sur la première partie profilée (1), de telle sorte qu'elle résiste au fait d'être prise à travers l'ouverture longitudinale (5) du type fente, comportant une deuxième partie de liaison (23), destinée à venir se placer dans la deuxième rainure d'ancrage (4), et comportant une partie de serrage (24), s'appliquant sur les deux parties de liaison (18, 23), qui est susceptible d'être entraînée dans un mouvement de serrage dans lequel les deux parties de liaison (18, 23) sont sollicitées l'une en direction de l'autre, sensiblement en direction de l'axe longitudinal (16) de la deuxième rainure d'ancrage (4), la deuxième partie de liaison (23) étant fixée dans la deuxième rainure d'ancrage (4) sans possibilité de déplacement longitudinal, caractérisé en ce qu'est prévue une partie d'appui (56), destinée à venir se placer dans la deuxième rainure d'ancrage (4) entre les deux parties de liaison (18, 23), qui, lors du mouvement de serrage de la partie de serrage s'appliquant sur la deuxième partie de liaison (23), est sollicitée par la deuxième partie de liaison (23) en direction de la première partie de liaison (18) et qui, dans ce cas, en adoptant une position d'appui sur la face frontale ouverte de la deuxième rainure d'ancrage (4), s'appuie, par au moins une partie d'appui (57), sur la première partie profilée (1), et en ce que la deuxième partie de liaison (23) et la partie d'appui (56), par l'intermédiaire d'une zone de pivotement (63), agissent conjointement de telle sorte qu'elles décrivent, l'une par rapport à l'autre, un mouvement de pivotement perpendiculaire à l'axe longitudinal (16) de la deuxième rainure d'ancrage (4) et sont ainsi serrées, dans le sens transversal, dans cette deuxième rainure d'ancrage (4), lorsque la deuxième partie de liaison (23), dans le cas où la partie d'appui (56) se trouve en position d'appui, est sollicitée de façon croissante en direction de la partie d'appui (56), par l'intermédiaire de la partie de serrage (24).

2. Dispositif de liaison selon la revendication 1, caractérisé en ce qu'est prévu, entre la deuxième partie de liaison (23) et la partie d'appui (56), un espace de déformation (69), qui est surmonté par une partie de liaison déterminant la zone de pivotement (63) et reliant entre elles les deux parties (56, 23).

3. Dispositif de liaison selon la revendication 2, caractérisé en ce que l'espace de déformation (69) présente un tronçon intérieur (74), situé immédiatement à côté de la partie de liaison (68), dans la zone duquel l'écart entre la partie d'appui (56) et la deuxième partie de liaison (23) est plus important que dans la zone d'un tronçon extérieur (75) de l'espace de déformation (69) qui fait suite, du côté opposé à la partie de liaison (68), au tronçon intérieur (74).

4. Dispositif de liaison selon la revendication 2 ou 3, caractérisé en ce que la deuxième partie de liaison (23) et la partie d'appui (56) sont reliées, par l'intermédiaire de la partie de liaison (68), pour ne former qu'une seule pièce, et peuvent décrire le mouvement de pivotement nécessaire, du fait de la déformation élastique de la matière, dans la zone de la partie de liaison (68).

5. Dispositif de liaison selon la revendication 4, caractérisé en ce que la deuxième partie de liaison (23) et la partie d'appui (56) forment un composant monobloc d'un élément de serrage (66) constitué, en particulier, en métal, qui présente une rainure transversale formant l'espace de déformation (69) lorsqu'il y a sollicitation de la partie de liaison (68).

6. Dispositif de liaison selon l'une des revendications 1 à 5, caractérisé en ce que la zone de pivotement (63) est située, avec un certain écart, latéralement à côté de l'axe de sollicitation (79) de la partie de serrage (24), qui sollicite la deuxième partie de liaison (23) en direction de la partie d'appui (56).

7. Dispositif de liaison selon l'une des revendications 1 à 6, caractérisé en ce que la partie de serrage (24) est un tiran d'ancrage (34), qui traverse à la fois la deuxième partie de liaison (23) et la partie d'appui (56), la zone de pivotement (63) étant située latéralement à côté du tiran d'ancrage (34).

8. Dispositif de liaison selon l'une des revendications 1 à 7, caractérisé en ce que la partie d'appui (56) présente, sur la face frontale orientée en direction de la première partie profilée (1), une saillie de centrage (77), qui plonge, en position d'appui, dans l'ouverture longitudinale (5), du type fente, de la première rainure d'ancrage (1).

9. Dispositif de liaison selon l'une des revendications 1 à 8, caractérisé en ce que la première partie de liaison (18) est un coulisseau.
